# EUROPÄISCHE PATENTSCHRIFT

(11) **EP 1 965 636 B1**
(45) Veröffentlichungstag und Bekanntmachung des Hinweises auf die Patenterteilung: **02.12.2009**
(21) Anmeldenummer: 06847027.7
(22) Anmeldetag: 11.12.2006
(51) Int. Cl.: A01N 25/10, A01C 1/06, C08L 67/00

(54) **BEIZMITTEL-FORMULIERUNGEN ENTHALTEND EINEN BIOLOGISCH ABBAUBAREN TEILAROMATISCHEN POLYESTER**
SEED DRESSING FORMULATION COMPRISING A BIODEGRADABLE PARTIALLY AROMATIC POLYESTER
FORMULATION POUR LE TRAITEMENT DE LA SEMENCE A BASE D'UN POLYESTER BIODEGRADABLE PARTIELLEMENT AROMATIQUE

(30) Priorität: 22.12.2005 EP 05028144
(43) Veröffentlichungstag der Anmeldung: 10.09.2008
(73) Patentinhaber: BASF SE, 67056 Ludwigshafen (DE)
(72) Erfinder: MARTIN, Ingrid, 67071 Ludwigshafen (DE); AUWETER, Helmut, 67117 Limburgerhof (DE); ISRAELS, Rafel, 50674 Köln (DE); DOMBO, Peter, 65207 Wiesbaden (DE); JAKOB, Jürgen, 67127 Rödersheim-Gronau (DE); LOPEZ CASANELLO, Diego, 67346 Speyer (DE); BOHN, Heribert, 67319 Wattenheim (DE)
(86) Internationale Anmeldenummer: PCT/EP2006/069523
(87) Internationale Veröffentlichungsnummer: WO 2007/074042

(56) Entgegenhaltungen:
- EP-A- 1 227 129
- WO-A-01/17347
- WO-A-98/12245
- WO-A-98/14413
- WO-A-2004/067632
- JP-A- 2002 173 535
- JP-A- 2002 241 629
- JP-A- 2004 300 284
- PATENT ABSTRACTS OF JAPAN Bd. 1996, Nr. 03, 29. März 1996 (1996-03-29) & JP 07 300522 A (AGENCY OF IND SCIENCE & TECHNOL; others: 02), 14. November 1995 (1995-11-14)
- CHARNAY, M.P. ET AL: "Influence of soil type and water content on release of triticonazole from coated maize seed" PEST MANAGEMENT SCIENCE, Bd. 53, Nr. 3, 25. Februar 2000 (2000-02-25), Seiten 249-256, XP002387017

## Beschreibung

Die vorliegende Erfindung betrifft die Verwendung von teilaromatischen biologisch abbaubaren Polyestern zur Beizung von Saatgut, Beizmittel-Formulierungen umfassend teilaromatische biologisch abbaubare Polyester, ein Verfahren zu deren Herstellung und deren Verwendung zum Beizen von Saatgut.

Umwelteinflüsse wie Wind, Sonne, Regen aber auch Grundwasser können eine unerwünschte Verteilung von Pflanzenschutzwirkstoffen bewirken. Hierdurch kann die Menge an Wirkstoff so reduziert werden, dass später auftretender Befall an Schadorganismen oder späteres Wachstum unerwünschter Pflanzen nicht verhindert werden kann.

Formulierungen mit kontrollierter Wirkstoffabgabe umgehen diese Problematik dadurch, dass über einen gewissen Zeitraum bestimmte Wirkstoffmengen verzögert abgegeben werden.

Hierbei ist es wünschenswert, eine möglichst effiziente Freisetzungsrate zu erzielen.

Des weiteren kann es bei gebeiztem Saatgut durch Abrieb zur Entwicklung von Pestizid enthaltenen Stäuben kommen. Dies ist nachteilig bei der Handhabung des Saatgutes.

Auch kommt es bei herkömmlichen Beizformulierungen oft zu einer zu schnellen Wirkstoffabgabe.

Ein Nachteil zahlreicher im Stand der Technik beschriebener Formulierungen ist zudem, dass die dort beschriebenen Polymere nicht vollständig biologisch abbaubar sind.

Ein weiteres Problem bei der Saatgutbeize ist, dass der direkte Kontakt des Wirkstoffes mit dem Saatgut die Keimungsrate des Saatgutes negativ beeinflussen kann.

Zudem können bei der Saatgutbeize abhängig vom Wirkstoff Beeinträchtigungen des Wachstums der Pflanzen auftreten.

Des weiteren ist es vorteilhaft, wenn das Saatgut eine gute Fliessfähigkeit (d.h. einfache Applikation des Saatgutes) aufweist.

In WO 01/17347 wird die Saatgutbehandlung mit dem biologisch abbaubaren Polyester-polyurethan-polyharnstoff beschrieben.
Zur Herstellung des Polyester-polyurethan-polyharnstoff müssen jedoch krebserregende toxische Diisocyanate gehandhabt werden.

Aufgabe der vorliegenden Erfindung war daher die Bereitstellung einer Beizmittel-Formulierung, welche einen möglichst geringen Abrieb, d.h. verminderte Staubbildung des gebeizten Saatgut bewirkt; und/oder

die durch den Einsatz von Wirkstoffen ggf. nachteilig beeinflusste Keimungsrate des Saatgutes positiv beeinflusst und/oder
das durch den Einsatz von Wirkstoffen ggf. nachteilig beeinflusste Wachstum von Pflanzen aus behandelten Saatgutes positiv beeinflusst und/oder
eine kontrollierte Wirkstoffabgabe bewirkt und/oder
eine gute Fliessfähigkeit aufweisen.

Ein weiteres Problem kann eine unzureichende biologische Abbaubarkeit darstellen. Im Allgemeinen bedeutet die biologische Abbaubarkeit, daß die Polyester in einer angemessenen und nachweisbaren Zeitspanne zerfallen. Der Abbau kann hydrolytisch und/oder oxidativ erfolgen und zum überwiegenden Teil durch die Einwirkung von Mikroorganismen wie Bakterien, Hefen, Pilzen und Algen bewirkt werden. Die biologische Abbaubarkeit lässt sich z.B. dadurch bestimmen, daß Polyester mit Kompost gemischt und für eine bestimmte Zeit gelagert werden. Gemäß ASTM D 5338, ASTM D 6400 und DIN V 54900 wird CO2-freie Luft beispielsweise durch gereiften Kompost während des Kompostierens strömen gelassen und dieser einem definierten Temperaturprogramm unterworfen. Hierbei wird die biologische Abbaubarkeit über das Verhältnis der Netto-CO2-Freisetzung der Probe (nach Abzug der CO2-Freisetzung durch den Kompost ohne Probe) zur maximalen CO2-Freisetzung der Probe (berechnet aus dem Kohlenstoffgehalt der Probe) definiert. Kunststoffe sind vollständig biologisch abbaubar (nach DIN V 54 900,Teil 2), wenn mindestens 60 % des organischen Kohlenstoffs des Materials in einem Prüfzeitraum von maximal 180 Tagen zu CO2 umgesetzt worden sind. Biologisch abbaubare Polyester zeigen in der Regel schon nach wenigen Tagen der Kompostierung deutliche Abbauerscheinungen wie Pilzbewuchs, Riss- und Lochbildung. Dem hingegen sind Kettenwachstumspolymere mit C-C-Hauptkette wie z.B. Polyethylen nur sehr wenig bis gar nicht bioabbaubar.

Die Bioabbaubarkeit von Stufenwachstumspolymeren wie z.B. Polyestern hängt nach bisherigen wissenschaftlichen Erkenntnissen (W. Tänzer, Biologisch abbaubare Polymere, Deutscher Verlag für Grundstoffindustrie, Stuttgart 2000) von folgenden Faktoren ab:
- Den chemischen Bindungen (Ester>Ether>Amide>Urethane)
- Der Molmasse (je niedriger desto schneller der Abbau)
- Der Morphologie (amorphe Polymere bauen schneller ab als kristalline)
- Der Härte und der Glasübergangstemperatur Tg (weiche bauen schneller ab als harte)
- Der Hydrophilie (hydrophile bauen schneller ab als hydrophobe)

Da diese Faktoren auch Polymereigenschaften (wie z.Bsp. gute Filmbildung) beeinflussen, die für die Anwendbarkeit in den Beizmittelformulierungen wichtig sind, war es weiterhin Aufgabe der vorliegenden Erfindung, Saatgutformulierungen bereitzustellen, die eine möglichst hohe, d.h. nahezu vollständige Bioabbaubarkeit aufweisen.

Die Aufgabe wurde durch die Verwendung eines wie untendefinierten biologisch abbaubaren teilaromatischen Polyesters in der Saatgutbeize gelöst.

Die vorliegende Erfindung umfasst auch die Verwendung eines biologisch teilaromatischen abbaubaren Polyesters wie unten definiert für die Herstellung von Beizmittel-Formulierungen.

Unter dem Begriff Beize werden alle dem Fachmann bekannten Saatgutbehandlungstechniken umfasst (z.B. "seed dressing", "seed coating" und "pelleting").

Die Angabe "biologisch abbaubare teilaromatische Polyester" soll alle teilaromatischen Polyester umfassen, welche mindestens die in DIN V 54900 gegebene Definition der Bioabbaubarkeit erfüllen, insbesondere kompostierbare teilaromatische Polyester, d.h. die zu mehr als 60% gemäß DIN V 54900 biologisch abbaubar sind.

Zu den biologisch abbaubaren teilaromatischen Polyestern gehören lineare nicht kettenverlängerte Polyester (WO 92/09654), kettenverlängerte und/oder verzweigte teilaromatische Polyester (WO 96/15173 bis 15176, 21689 bis 21692, 25446, 25448 oder der WO 98/12242),

Die erfindungsgemäße Polymere sind Polyester, im folgenden auch als TA-Polyester bezeichnet, welche aufgebaut sind aus:
A) einer Säurekomponente aus
   a1) 30 bis 95 mol-% mindestens einer aliphatischen oder mindestens einer cycloaliphatischen Dicarbonsäure oder deren esterbildende Derivate oder Mischungen davon
   a2) 5 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
      wobei die Molprozente der Komponenten a1) bis a3) zusammen 100% ergeben und
B) einer Diolkomponente aus mindestens einem C₂-bis C₁₂-Alkandiol oder einem C₅-bis C₁₀-Cycloalkandiol oder Mischungen davon

Die Säurekomponente A der bevorzugten teilaromatischen Polyester enthält von 30 bis 70, insbesondere von 40 bis 60 mol-% a1 und von 30 bis 70, insbesondere von 40 bis 60 mol-% a2.

Als aliphatische, bzw. cycloaliphatische Säuren und die entsprechenden Derivate a1 kommen die folgenden Verbindungen in Betracht.

Erfindungsgemäß geeignete aliphatische Dicarbonsäuren haben im allgemeinen 2 bis 10 Kohlenstoffatome, vorzugsweise 4 bis 6 Kohlenstoffatome. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C1- bis C6-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Besonders bevorzugt wird Adipinsäure oder Sebacinsäure deren jeweiligen esterbildenden Derivate oder Mischungen davon eingesetzt. Besonders bevorzugt wird Adipinsäure oder deren esterbildende Derivate, wie deren Alkylester oder deren Mischungen eingesetzt.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C1-C6-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol-% a3.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Es können auch Mischungen unterschiedlicher Alkandiole verwendet werden.

Abhängig davon ob ein Überschuß an Säure- oder OH-Endgruppen gewünscht wird, kann entweder die Komponente A oder die Komponente B im Überschuß eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die TA Polyester weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mn) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der TA Polyester verwendet werden.

In einer bevorzugten Ausführungsform setzt man als Hydroxycarbonsäure c2) ein: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich), besonders bevorzugt für die Herstellung von TA Polyester die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C2-C12-alkanol oder Amino-C5-C10-cyloalkanol (Komponente c3), wobei hierunter auch 4-Aminomethylcyclohexanmethanol fallen soll, setzt man bevorzugt Amino-C2-C6-alkanole wie 2-Aminoethanol, 3-Aminopropanol, 4-Aminobutanol, 5-Aminopentanol, 6-Aminohexanol sowie Amino-C5-C6-cyloalkanole wie Aminocyclopentanol und Aminocyclohexanol oder Mischungen davon ein.

Als Diamino-C1-C8-alkan (Komponente c4) setzt man bevorzugt Diamino-C4-C6-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der TA Polyester eingesetzt werden.

Die 2,2'-Bisoxazoline c5 der allgemeinen Formel III sind im allgemeinen erhältlich durch das Verfahren aus Angew. Chem. Int. Edit., Vol. 11 (1972), S. 287-288. Besonders bevorzugte Bisoxazoline sind solche, in denen R1 eine Einfachbindung, eine (CH2)z-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Zur Herstellung der TA Polyester können beispielsweise von 70 bis 98 mol-% B, bis 30 mol-% c3 und 0,5 bis 30 mol-% c4 und 0,5 bis 30 mol-% c5, jeweils bezogen auf die Summe der Molmengen der Komponenten B, c3, c4 und c5, verwendet werden. Nach einer anderen bevorzugten Ausführungsform ist es möglich von 0,1 bis 5, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH2)u-, wobei u 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der TA Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:

Weinsäure, Zitronensäure, Äpfelsäure; Trimethylolpropan, Trimethylolethan; Pentaerythrit; Polyethertriole; Glycerin; Trimesinsäure; Trimellitsäure, -anhydrid; Pyromellitsäure, -dianhydrid und Hydroxyisophthalsäure.

Die Verbindungen d1 werden in der Regel in Mengen von 0,01 bis 15, bevorzugt 0,05 bis 10, besonders bevorzugt 0,1 bis 4 mol-%, bezogen auf die Komponente A eingesetzt.

Als Komponente d2 werden ein oder eine Mischung unterschiedlicher Isocyanate eingesetzt. Es können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden. Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikerniges Isocyanat d2 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der Isocyanatgruppen, enthalten.

Unter einem aliphatischen Diisocyanat d2 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d2 sind 1,6-Hexamethylendiisocyanat und Isophorondiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des n-Hexamethylendiisocyanats.

Im allgemeinen wird die Komponente d2 in Mengen von 0,01 bis 5, bevorzugt 0,05 bis 4 mol-%, besonders bevorzugt 0,1 bis 4 mol-% bezogen auf die Summe der Molmengen von A und B verwendet.

Als Divinylether d3 kann man im allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter TA Polyester basieren auf den folgenden Komponenten
A, B, d1
A, B, d2
A, B, d1, d2
A, B, d3
A, B, c1
A,B,c1,d3
A, B, c3, c4
A, B, c3, c4, c5
A, B, d 1, c3, c5
A, B, c3, d3
A, B, c3, d1
A, B, c1, c3, d3
A, B, c2

Darunter sind TA Polyester, die auf A, B, d1 oder A, B, d2 oder auf A, B, d1, d2 basieren besonders bevorzugt. Nach einer anderen bevorzugten Ausführungsform basieren die teilaromatischen Polyester auf A, B, c3, c4, c5 oder A, B, d1, c3, c5.

Die Herstellung der TA Polyester ist an sich zum Beispiel aus der WO96/15173 und WO 04/67632 bekannt oder kann nach an sich bekannten Methoden erfolgen.

Die bevorzugten TA Polyester sind charakterisiert durch ein Molekulargewicht (Mn) im Bereich von 1000 bis 100000,insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten aliphatischen und teilaromatischen Polyester, vozugsweise TA Polyester, können Hydroxy- und/oder Carboxylendgruppen in jedem beliebigen Verhältnis aufweisen. Die genannten aliphatischen und/oder teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Ganz besonders bevorzugt sind TA Polyester a1a2B gemäß der oben stehenden Definitionen, in welchen als Komponente a1 Adipinsäure, als Komponente a2 Terephthalsäure und als Komponente B 1,4-Butandiol eingesetzt wird (Polybutylenadipatterephthalate, z.B. kommerziell erhältlich als Ecoflex® (BASF))

In einer Ausführungsform der vorliegenden Erfindung können auch Mischugen von TA Polyestern mit Biopolymeren wie z.Bsp. Stärke oder mit modifizierten biobabbaubaren Biopolymeren, wie z.B. modifizierter Stärke, Celluloseestern (z.B. Celluloseacetat, Celluloseacetatbutyrat) oder biobabbaubaren artifiziellen Polymeren wie Polylactid (beispielsweise als EcoPLA® (Fa. Cargill) erhältlich) eingesetzt werden.

Im nachfolgenden wird der Begriff "biologisch abbaubarer teilaromatischer Polyester, vorzugsweise TA Polyester sowie Mischungen von TA Polyester mit Biopolymeren wie z.Bsp. Stärke oder mit modifizierten biobabbaubaren Biopolymeren, wie z.B. modifizierter Stärke, Celluloseestern (z.B. Celluloseacetat, Celluloseacetatbutyrat) oder mit biobabbaubaren artifiziellen Polymeren wie Polylactid (Polymilchsäure) (beispielsweise als EcoPLA® (Fa. Cargill) erhältlich) durch den Begriff "erfindungsgemäßer Polyester" ersetzt. Bevorzugt beschreibt der Begriff "erfindungsgemäßer Polyester" TA Polyester,. Mischungen von TA Polyester mit Polymilchsäure, besonders bevorzugt TA Polyester,
wobei für den TA Polyester die unter der Definition des TA Polyesters aufgeführten Bevorzugungen gelten.

Der erfindungsgemäße Polyester kann erfindungsgemäß in Form einer Dispersion, vorzugsweise einer wässrigen Dispersion eingesetzt werden.

Die erfindungsgemäßen Polyester Dispersionen können optional mit einem oder mehreren Schutzkolloide und/oder einem oder mehreren Emulgatoren zur Stabilisierung enthalten. Geeignete Emulgatoren sowie Schutzkolloide sind unten aufgeführt. Herstellverfahren für wässrige Polymerdispersionen sind z.B. in D. Distler "wässrige Polymerdispersionen", Wiley-VCH, Weinheim 1999 beschrieben. Prinzipiell können wässrige Polymerdispersionen direkt über Emulsionspolymerisation erhalten werden. Man kann aber auch beliebige lösliche Polymere in Lösungsmitteln lösen, die Lösungen in Wasser emulgieren und das Lösungsmittel anschließend abziehen, um wässrige Dispersionen zu erhalten. In diesem Falle spricht man von Sekundärdispersionen, da das Polymer in einem separatem Schritt vorher hergestellt wurde.

Derartige Verfahren sind dem Fachmann bekannt.

So sind z.Bsp. Verfahren zur Herstellung entsprechender wässriger Dispersionen von erfindungsgemäßen Polyestern aus der WO 98/12245 bekannt.

In einer bevorzugten Ausführungsform ist das Verfahren zur Herstellung der Sekundärdisperion von erfindungsgemäßen Polyestern **dadurch gekennzeichnet, dass** man
(a) den erfindungsgemäßen Polyester in einem organischen Lösungsmittel löst, und
(b) die aus (a) resultierende Lösung mit Wasser in Kontakt bringt und
(c) das organische Lösungsmittel nach dem Mischen entfernt.

Der in Schritt (b) beschriebene Mischvorgang kann diskontinuierlich oder, bevorzugt, kontinuierlich erfolgen. Um beim Mischvorgang möglichst kleine Teilchen-, bzw. Tröpchengrößen zu erzielen, empfiehlt sich ein hoher mechanischer Energieeintrag beim Vermischen. Ein solcher Energieeintrag kann beispielsweise durch starkes Rühren oder Schütteln in einer geeigneten Vorrichtung erfolgen. In einer bevorzugten Ausführungsform des oben genannten Verfahrens wird der in Schritt (b) beschriebene Mischvorgang durch Einspritzen der entsprechenden Lösungen in eine Mischkammer durchgeführt. Ein derartiger Mischvorgang ist dem Fachmann bekannt und z.B. in der WO 00/33820 beschrieben.

In einer bevorzugten Ausführungsform des oben genannten Verfahrens wird in Schritt (b) anstelle von Wasser eine wässrige Lösung eines oder mehrerer Schutzkolloide und/oder eines oder mehrerer Emulgatoren verwendet.

Ebenso ist es möglich, in Schritt (b) des oben genannten Verfahrens anstelle von Wasser Mischungen von Wasser mit wassermischbaren Hilfsstoffen wie Glykolen und Glycerin zu verwenden. Bevorzugt ist die Verwendung von Wasser.

Als organische Lösungsmittel kommen sowohl mit Wasser mischbare als auch mit Wasser nicht mischbare Lösungsmittel infrage.

Der Begriff "nicht mit Wasser mischbare organische Lösungsmittel" beschreibt organische Lösungsmittel, die in Wasser eine Löslichkeit von weniger als 10% haben, in einer bevorzugten Ausführungsform weniger als 5%. Vorzugsweise liegt der Siedepunkt bei 0-100 °C unter Normalbedingungen (1 bar Druck, 20°C).

Folgende Lösungsmittel seien beispielhaft genannt, ohne jedoch einschränkend zu sein: Cyclohexan, Cyclopentan, Pentan, Hexan, Heptan, 2-Methylpentan, 3-Methylpentan, 2-Methylhexan, 3-Methylhexan, 2-Methylbutan, 2,3-Dimethylbutan, Methylcyclopentan, Methylcyclohexan, 2,3-Dimethylpentan, 2,4-Dimethylpentan, Benzol, 1-Penten, 2-Penten, 1-Hexen, 1-Hepten, Cyclohexen, 1-Butanol, Ethylvinylether, Propylether, Isopropylether, Butylvinylether, Butylethylether, 1,2-Epoxybutan, Furan, Tetrahydropyran, 1-Butanal, 2-Methylpropanal, 2-Pentanon, 3-Pentanon, Cyclohexanon, Fluorbenzol, Hexafluorbenzol, Ethylformiat, Propylformiat, Isopropylformiat, Ethylacetat, Vinylacetat, Isopropylacetat, Ethylpropionat, Methylacrylat, Ethylacrylat, Methylmethacrylat, Chlorethan, 1-Chlorpropan, 2-Chlorpropan, 1-Chlorbutan, 2-Chlorbutan, 1-Chlor-2-methylpropan, 2-Chlor-2-methylpropan, 1-Chlor-3-methylbutan, 3-Chlorpropen, Dichlormethan, Trichlormethan, Tetrachlormethan, 1,1-Dichlorethan, 1,2-Dichlorethan, 1,2-Dichlorpropan, 1,1,1-Trichlorethan, 1,1-Dichlorethylen, 1,2-Dichlorethylen, Trichlorethylen, Brommethan, 1-Brompropan, 2-Brompropan, 1-Brombutan, 2-Brombutan, 2-Brom-2-methylpropan, Brommethylen, lodmethan, Iodethan, 2-lodpropan, Trichlorfluormethan, Dichlorfluormethan, Dibromfluormethan, Bromchlormethan, Bromchlorfluormethan, 1,1,2-Trichlor-1,2,2-trifluorethan, 1,1,2,2-Tetrachlordifluorethan, 1,2-Dibromtetrafluorethan, 1,2-Dibrom-1,1-Diflourethan, 1,1-Dichlor-2,2-Difluorethylen, Propionitril, Acrylonitril, Methacrylonitril, Triethylamin, Schwefelkohlenstoff, 1-Butanthiol, Methylsulfid, Ethylsulfid und Tetramethylsilan.

Der Begriff " mit Wasser mischbare organische Lösungsmittel" beschreibt organische, mit Wasser mischbare Lösungsmittel, welche flüchtig und thermisch stabil sind und nur Kohlenstoff, Wasserstoff, Sauerstoff, Stickstoff und Schwefel enthalten. Zweckmäßigerweise sind sie unter Normalbedingungen (1 bar Druck, 20°C) zu mindestens 10 Gew.-% mit Wasser mischbar und weisen einen Siedepunkt unter 200 °C, bevorzugt unter 100°C auf und/oder haben weniger als 10 Kohlenstoffatome.

Bevorzugt sind entsprechende Alkohole, Ester, Ketone, Ether und Acetale. Insbesondere verwendet man man Ethanol, n-Propanol, Isopropanol, Buthylacetat, Ethylacetat, Tetrahydrofuran, Aceton, 1,2-Propandiol-1-n-propylether oder 1,2-Butandiol-1methylether. Ganz besonders bevorzugt sind Ethanol, Isopropanol, Tetrahydrofuran und Aceton.

Bei Verwendung mit Wasser mischbarer Lösungsmittel kommt es bei der der Durchmischung mit der wässrigen Phase in Schritt (b) zu einer Verschlechterung der Lösemittelqualität wodurch die Polyesterteilchen präzipitiert werden.

Werden nicht Wasser mischbare Lösungsmittel wie z.B. Methylenchlorid, Cyclohexan oder Ethylacetat verwendet, entsteht beim Durchmischen in Schritt (b) eine Emulsion, aus der die Polyesterteilchen bei der anschließenden Evaporation des Lösemittels durch Übersättigung der Lösung präzipitiert werden.

Die Entfernung des Lösemittels in Schritt c) des oben genannten Verfahrens kann nach dem Fachmann bekannten Methoden wie z.B. Destillation, ggf. unter vermindertem Druck, erfolgen.

Die nach dem oben genannten Verfahren erhaltenen wässrigen Dispersionen eines erfindungsgemäßen Polyesters weisen einen Feststoffgehalt von 1-70% auf, bevorzugt von 10-30%. Die durch quasi-elastische Lichtstreuung bestimmbaren mittleren Teilchengrößen der erfindungsgemäßen Polyesterpartikel in den nach oben genannten Verfahren erhaltenen wässrigen Dispersionen beträgt 10 nm - 5000 nm, bevorzugt 50 nm - 500 nm.

Die vorliegende Erfindung beansprucht auch wässrige Dispersion eines erfindungsgemäßen Polyesters herstellbar nach dem oben genannten Verfahren.

Des weiteren umfasst die vorliegende Erfindung Beizmittel-Formulierungen umfassend
(1) einen erfindungsgemäßen Polyester,
(2) mindestens einen, zur Beizung von Saatgut geeigneten agrochemischen Wirkstoff, wobei der Wirkstoff in festen Partikeln vorliegt, welche eine Größe zwischen 0,1µm und 10µm haben; und
(3) ein Lösungsmittel;

Der Begriff "agrochemischer Wirkstoff' (2) bedeutet hier mindestens ein Wirkstoff ausgewählt aus der Gruppe der Insektizide, Fungizide, Herbizide und/oder Safener, Wachstumsregulatoren (s. Pesticide Manual, 13th Ed. (2003)) verwendet wird.

Die folgende Liste von Insektiziden zeigt mögliche Wirkstoffe auf, soll aber nicht auf diese beschränkt sein:
Organo(thio)phosphate wie Acephate, Azamethiphos, Azinphos-methyl, Chlorpyrifos, Chlorpyriphos-methyl, Chlorfenvinphos, Diazinon, Dichlorphos, Dicrotophos, Dimethoate, Disulfoton, Ethion, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, Sulprophos, Triazophos, Trichlorfon;
Carbamate wie Alanycarb, Benfuracarb, Bendiocarb, Carbaryl, Carbosulfan, Fenoxycarb, Furathiocarb, Indoxacarb, Methiocarb, Methomyl, Oxamyl, Pirimicarb, Propoxur, Thiodicarb, Triazamate;
Pyrethroide wie Allethrin, Bifenthrin, Cyfluthrin, Cyphenothrin, Cypermethrin sowie die alpha-, beta-, theta- und zeta-Isomere, Deltamethrin, Esfenvalerate, Ethofenprox, Fenpropathrin, Fenvalerate, Cyhalothrin, Lambda-Cyhalothrin,
Imiprothrin, Permethrin, Prallethrin, Pyrethrin I, Pyrethrin II, Silafluofen, Tau-Fluvalinate, Tefluthrin, Tetramethrin, Tralomethrin, Transfluthrin, Zeta-Cypermethrin; Arthropode Wachstumsregulatoren wie
   a) Chitinsyntheseinhibitoren; z. B. Benzoylharnstoffe wie Chlorfluazuron, Cyromacin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine;
   b) Ecdysone Antagonisten wie Halofenozide, Methoxyfenozide, Tebufenozide;
   c) Juvenoide wie Pyriproxyfen, Methoprene, Fenoxycarb;
   d) Lipidbiosynthese-Inhibitoren wie Spirodiclofen;
Neonicothinoide wie Flonicamid, Clothianidin, Dinotefuran, Imidacloprid, Thiamethoxam, Nitenpyram, Nithiazin, Acetamiprid, Thiacloprid;
Pyrazol-Insektizide wie Acetoprole, Ethiprole, Fipronil, Tebufenpyrad, Tolfenpyrad und Vaniliprole;Weiterhin Abamectin, Acequinocyl, Amitraz, Azadirachtin, Bifenazate, Cartap, Chlorfenapyr, Chlordimeform, Cyromazine, Diafenthiuron, Diofenolan, Emamectin, Endosulfan, Fenazaquin, Formetanate, Formetanate-Hydrochlorid, Hydramethylnon Indoxacarb, Piperonylbutoxid, Pyridaben, Pymetrozine, Spinosad, Thiamethoxam, Thiocyclam, Pyridalyl, Pyridalyl, Flonicamid, Fluacypyrim, Milbemectin, Spiromesifen, Flupyrazofos, NC 512, Tolfenpyrad, Flubendiamide, Bistrifluron, Benclothiaz, Pyrafluprole, Pyriprole, Amidoflumet, Flufenerim, Cyflumetofen, Acequinocyl, Lepimectin, Profluthrin, Dimefluthrin, Metaflumizone, N-R'-2,2-dihalo-1-R"cyclo-propanecarboxamide-2-(2,6-dichloro- α,α,α,α-tri-fluoro-p-tolyl)hydrazone oder N-R'-2,2-di(R"')propionamide-2-(2,6-dichloro- α,α,α,α -trifluoro-p-tolyl)-hydrazone, wobei R' methyl oder ethyl ist, halo für chlor oder brom, R" Wasserstoff oder Methyl und R"' für methyl oder ethyl steht, Carbonsäurediester der folgenden Formel

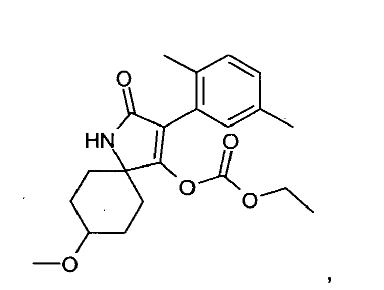

Carbonic acid 3-(2,5-dimethyl-phenyl)-8-methoxy-2-oxo-1-aza-spiro[4.5]dec-3-en-4-yl ester ethyl ester

Aminoiso-thiazol der Formel 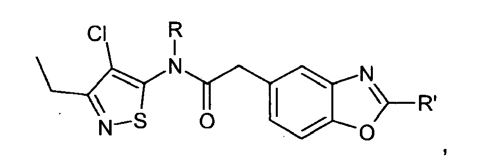 worin
R = -CH2OCH3 oder H und
R' = -CF2CF2CF3;

Anthranilamide der Formel 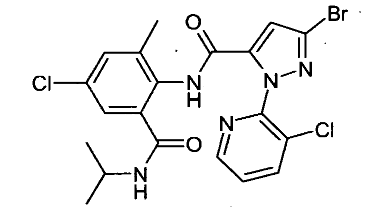 5-Bromo-2-(3-chloro-pyridin-2-yl)-2H-pyrazole-3-carboxylic acid (4-chloro-2-isopropyl-carbamoyl-6-methyl-phenyl)-amide

Die folgende Liste von Fungiziden zeigt mögliche Wirkstoffe auf, soll aber nicht auf diese beschränkt sein:
1. Strobilurine wie
   Azoxystrobin, Dimoxystrobin, Enestroburin, Fluoxastrobin, Kresoxim-methyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethyl ester, 2-(ortho-((2,5-Dimethylphenyl-oxymethylen)phenyl)-3-methoxy-acrylsäuremethylester;
2. Carbonsäureamide wie
   Carbonsäureanilide: Benalaxyl, Benodanil, Boscalid, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3,4-Dichlor-isothiazol-5-carbonsäure (2-cyano-phenyl) amid;
   Carbonsäuremorpholide: Dimethomorph, Flumorph;
   Benzoesäureamide: Flumetover, Fluopicolide (Picobenzamid), Zoxamide; Sonstige Carbonsäureamide: Carpropamid, Diclocymet, Mandipropamid, N-(2-(4-[3-(4-Chlor-phenyl)-prop-2-inyloxy]-3-methoxy-phenyl)-ethyl)-2-methansulfonylamino-3-methyl-butyramid, N-(2-(4-[3-(4-Chlor-phenyl)-prop-2-inyloxy]-3-methoxy-phenyl)-ethyl)-2-ethansulfonylamino-3-methyl-butyramid;
3. Azole wie
   Triazole: Bitertanol, Bromuconazole, Cyproconazole, Difenoconazole, Diniconazole, Enilconazole, Epoxiconazole, Fenbuconazole, Flusilazole, e, Flutriafol, Hexaconazol, Imibenconazole, Ipconazole, Metconazol, MyclobuFluquinconazoltanil, Penconazole, Propiconazole, Prothioconazole, Simeconazole, Tebuconazole, Tetraconazole, Triadimenol, Triadimefon, Triticonazole;
   Imidazole: Cyazofamid, Imazalil, Pefurazoate, Prochloraz, Triflumizole; Benzimidazole: Benomyl, Carbendazim, Fuberidazole, Thiabendazole; Sonstige: Ethaboxam, Etridiazole, Hymexazole;
4. Stickstoffhaltige Heterocyclylverbindungen wie
   Pyridine: Fluazinam, Pyrifenox, 3-[5-(4-Chlor-phenyl)-2,3-dimethyl-isoxazolidin-3-yl]-pyridin;
   Pyrimidine: Bupirimate, Cyprodinil, Ferimzone, Fenarimol, Mepanipyrim, Nuarimol, Pyrimethanil;
   Piperazine: Triforine; Pyrrole: Fludioxonil, Fenpiclonil;
   Morpholine: Aldimorph, Dodemorph, Fenpropimorph, Tridemorph;
   Dicarboximide: Iprodione, Procymidone, Vinclozolin;
   sonstige: Acibenzolar-S-methyl, Anilazin, Captan, Captafol, Dazomet, Diclomezine, Fenoxanil, Folpet, Fenpropidin, Famoxadone, Fenamidone, Octhilinone, Probenazole, Proquinazid, Pyroquilon, Quinoxyfen, Tricyclazole, 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on, 3-(3-Brom-6-fluoro-2-methyl-indol-1-sulfonyl)-[1,2,4]triazol-1-sulfonsäuredimethylamid;
5. Carbamate und Dithiocarbamate wie
   Dithiocarbamate: Ferbam, Mancozeb, Maneb, Metiram, Metam, Propineb, Thiram, Zineb, Ziram;
   Carbamate: Diethofencarb, Flubenthiavalicarb, Iprovalicarb, Propamocarb, 3-(4-Chlorphenyl)-3-(2-isopropoxycarbonylamino-3-methyl-butyrylamino)-propionsäure-methylester, N-(1-(1-(4-cyanophenyl)ethansulfonyl)-but-2-yl) carbaminsäure-(4-fluorphenyl)ester;
6. Sonstige Fungizide wie
   Guanidine: Dodine, Iminoctadine, Guazatine;
   Antibiotika: Kasugamycin, Polyoxine, Streptomycin, Validamycin A; Organometallverbindungen: Fentin Salze;
   Schwefelhaltige Heterocyclylverbindungen: Isoprothiolane, Dithianon; Organophosphorverbindungen: Edifenphos, Fosetyl, Fosetyl-aluminium, Iprobenfos, Pyrazophos, Tolclofos-methyl, Phosphorige Säure und ihre Salze; Organochlorverbindungen: Thiophanate Methyl, Chlorothalonil, Dichlofluanid, Tolylfluanid, Flusulfamide, Phthalide, Hexachlorbenzene, Pencycuron, Quintozene; Nitrophenylderivate: Binapacryl, Dinocap, Dinobuton;
   Anorganische Wirkstoffe: Bordeaux Brühe, Kupferacetat, Kupferhydroxid, Kupferoxychlorid, basisches Kupfersulfat, Schwefel;
   Sonstige: Spiroxamine, Cyflufenamid, Cymoxanil, Metrafenone.

Wird als Wirkstoff ein Herbizid eingesetzt, so kann auch das Saatgut transgener oder durch herkömmliche Züchtungsmethoden erhaltener Pflanzen eingesetzt werden.

So kann Saatgut eingesetzt werden, das gegenüber Herbiziden tolerant ist, z.B. gegenüber Sulfonylharnstoffen, Imidazolinonen oder Glufonsinat oder Glyphosate resistenen Pflanzen (s. z.B. EP-A-0242236, EP-A-242246) (WO 92/00377) (EP-A-0257993, U.S. Pat. No. 5,013,659).

In einer bevorzugten Ausführungsform wird der agrochemische Wirkstoff aus der Gruppe der Fungizide und/oder Insektizide ausgewählt.

### Bevorzugte Fungizide sind

Strobilurine, vorzugsweise Kresoxim-methyl, Pyraclostrobin, Oryzastrobin Carbonsäureanilide, vorzugsweise Boscalid, und Azole, vorzugsweise Epoxiconazol, Prothioconazol, Tebuconazol, und Triticonazol, Fluquinconazol sowie Spiroxamin.

Besonsers bevorzugt sind Triticonazol und Fluquinconazol.

Ganz besonders bevorzugt ist Triticonazol.

Bevorzugte Insektizide sind Pyrazol-Insektizide, vorzugsweise Fipronil, Pyrethroide vorzugsweise Alpha-Cypermethrin, Neonicotinoide wie Flonicamid, Clothianidin, Dinotefuran, Imidacloprid, Thiamethoxam, Nitenpyram, Nithiazin, Acetamiprid und Thiacloprid, bevorzugtes Neonicotinoid is Imidacloprid.Ganz besonders bevorzugtes Insektizid ist Fipronil.

Die erfindungsgemäßen Beizmittel-Formulierungen enthalten 1 - 30 Gew.-%, bevorzugt 5 - 20 Gew.-% Polyester und 1 - 60 Gew.-%, bevorzugt 1 - 30 Gew.-% agrochemischen Wirkstoff.

Für die Saatgutbehandlung können die entsprechenden Formulierungen mit hoher Wirkstoffkonzentration auch 2 bis 10fach verdünnt werden.

Des weiteren können die erfindungsgemäßen Beizmittel-Formulierungen weitere Formulierungshilfsmittel enthalten. Diese Hilfsmittel können üblicherweise in 0,1 bis 40 Gew.-%, bevorzugt 5 bis 20 Gew.-% in den erfindungsgemäßen Beizmittel-Formulierungen enthalten sein

An 100% fehlende Prozent werden mit einem Lösungsmittel ergänzt.

Der Begriff Formulierungshilfsmittel beschreibt oberflächenaktive Stoffe (wie Netzmittel, Emulgatoren, Haftmittel oder Dispergiermittel oder Schutzkolloide), Antischäumungsmittel, Verdicker, Frostschutzmittel, Kleber sowie Bakterizide.

Als oberflächenaktive Stoffe, die in den erfindungsgemäßen Beizmittel-Formulierungen enthalten sein können, kommen alle zur Formulierung von agrochemischen Wirkstoffen üblichen oberflächenaktive Stoffe in Betracht, d.h. im vorliegenden Falle alle, dem Fachmann bekannte, wasserlöslichen Polymere mit amphiphilem Charakter wie zum Beispiel Proteine, denaturierte Proteine, Polysaccharide, hydrophob modifizierte Stärken, und synthetische Polymere, bevorzugt Polyvinylalkohol, Polycarboxylate, Polyalkoxylate, Polyvinylamin, Polyethylenimin, Polyvinylpyrrolidon und deren Copolymere. Diese Verbindung sind insbesondere als Schutzkollode geeignet.

Beispiele für weitere oberflächenaktive Stoffe, die in den erfindungsgemäßen Formulierungen enthalten sein können, sind übliche nichtionische, anionische und/oder kationische Dispergiermittel / Netzmittel wie Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylphenylethersulfonate, Alkylsulfate, Alkylsulfonate, Fettalkoholsulfate, Fettsäuren und sulfatierte Fettalkoholglykolether, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkyl-arylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpoly-glykoletheracetal, Saccharoseester, Sorbitester, Ligninsulfitablaugen und Methylcellulose.

Die Bedeutung und entsprechende Verwendung der oben genannten Mittel richtet sich nach der Natur des Wirkstoffes.

Als Verdicker, die in den erfindungsgemäßen Formulierungen enthalten sein können, kommen alle zur Formulierung von agrochemischen Wirkstoffen üblichen Verdicker in Betracht. Beispiele für Verdicker (d.h. Verbindungen, die der Formulierung ein pseudoplastisches Fließverhalten verleihen, d.h. hohe Viskosität im Ruhezustand und niedrige Viskosität im bewegten Zustand) sind beispielsweise Polysaccharide bzw. organische Schichtmineralien wie Xanthan Gum (Kelzan® der Fa. Kelco), Rhodopol® 23 (Rhone Poulenc) oder Veegum® (Firma R.T. Vanderbilt) oder Attaclay® (Firma Engelhardt).

Als Antischaummittel, die in den erfindungsgemäßen Formulierungen enthalten sein können, kommen alle zur Formulierung von agrochemischen Wirkstoffen üblichen Antischaummittel in Betracht. Beispiele für Antischaummittel sind Silikonemulsionen (wie z.Bsp. Silikon® SRE, Firma Wacker oder Rhodorsil® der Firma Rhodia), langkettige Alkohole, Fettsäuren, fluororganische Verbindungen und deren Gemische.

Bakterizide können zur Stabilisierung der wäßrigen Fungizid-Formulierung zugesetzt werden. Als Bakterizide, die in den erfindungsgemäßen Formulierungen enthalten sein können, kommen alle zur Formulierung von agrochemischen Wirkstoffen üblichen Bakterizide in Betracht wie zum Beispiel Bakterizide basierend auf Diclorophen und Benzylalkoholhemiformal. Beispiele für Bakterizide sind Proxel® der Fa. ICI oder Acticide® RS der Fa. Thor Chemie und Kathon® MK der Firma Rohm & Haas.

Als Frostschutzmittel, die in den erfindungsgemäßen Formulierungen enthalten sein können, kommen alle zur Formulierung von agrochemischen Wirkstoffen üblichen Frostschutzmittel in Betracht. Geeignete Frostschutzmittel sind z.B. Ethylenglycol, Propylenglycol oder Glycerin, vorzugsweise Propylenglycol und Glycerin.

Als Lösemittel kommt Wasser und Mischungen von Wasser mit wassermischbaren Hilfsstoffen wie Glycolen und Glyzerin in Betracht. Bevorzugtes Lösemittel ist Wasser.

Als Kleber, die in den erfindungsgemäßen Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Des weiteren können den erfindungsgemäßen Beizmittel-Formulierungen optional auch Farbstoffe zugesetzt werden. Hierbei kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe, sowie pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108

Die Herstellung der erfindungsgemäßen Formulierungen kann nach dem Fachmann bekannten Methoden erfolgen (vgl. US 3,060,084, EP-A 707 445 (für flüssige Konzentrate), Browning, "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 und Mollet, H., Grubemann, A., Formulation technology, Wiley VCH Verlag GmbH, Weinheim (Federal Republic of Germany), 2001).

Hierbei ist es möglich, die Beizmittel-Formulierung dadurch herzustellen, dass man eine Suspension eines zur Beizung von Saatgut geeigneten agrochemischen Wirkstoffes, in welcher der Wirkstoff in festen Partikeln vorliegt, die eine Größe zwischen 0,1µm und 10µm haben, mit einer wässrigen Dispersion eines biologisch abbaubaren Polyesters vermischt.

Hierbei kann man die Wirkstoffsuspension beispielsweise dadurch herstellen, dass man den/die entsprechenden Wirkstoff(e) unter Zusatz von oberflächenaktiven Stoffen (Dispergier- und Netzmitteln) und ggf. weiteren Hilfsmitteln und Wasser oder einem organischen Lösungsmittel in einer Rührwerkskugelmühle zu einer feinen Wirkstoffsuspension zerkleinert.

Hierbei kann die Wirkstoffsuspension auch eine kommerziell erhältliche Suspensions Formulierungen eines (oder mehrerer) agrochemischen Wirkstoffes sein (zBsp. SC, OD, FS), wobei der Wirkstoff die oben angeführten Teilchengrößen aufweisen muß.

Alternativ kann die Wirkstoffsuspension auch aus einer (ggf. auch kommerziell erhältlichen) Festformulierung eines Wirkstoffes durch Dispergieren in einem Lösungsmittel, vorzugsweise Wasser, hergestellt werden, (z.B. aus einer Pulverformulierung (z.Bsp. WP, SP, SS, WS) oder Granulat-Formulierung (z.Bsp. WG, SG) wobei, falls erforderlich, die entsprechenden Teilchengrössen durch Zerkleinerung (z.Bsp. Vermahlen) erhalten werden können. Die Herstellung von Granulatformulierungen ist dem Fachmann bekannt und kann nach bekannten Methoden erfolgen (vgl. US 3,060,084, Browning, "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 und Mollet, H., Grubemann, A., Formulation technology, Wiley VCH Verlag GmbH, Weinheim (Federal Republic of Germany), 2001).

Diesen Suspensionsformulierungen können optional, falls erforderlich, Kleber und Pigmente hinzugefügt werden.

Des weiteren umfasst die vorliegende Erfindung ein Verfahren zum Beizen von Saatgut basierend auf der Verwendung eines erfindungsgemäßen Polyesters.

In einer Ausführungsform der vorliegenden Erfindung ist das Verfahren zum Beizen von Saatgut **dadurch gekennzeichnet, dass** man
(a) Saatgut mit einer erfindungsgemäßen Beizmittel-Formulierung behandelt; und
(b) das in Schritt (a) erhaltene Saatgut gegebenenfalls trocknet

Hierbei kann -falls gewünscht- die erfindungsgemäße Beizmittel-Formulierung vor Applikation auf das Saatgut mit einem Lösungsmittel, vorzugsweise Wasser verdünnt werden.

In einer weiteren Ausführungsform der vorliegenden Erfindung ist das Verfahren zum Beizen von Saatgut **dadurch gekennzeichnet, dass** man Saatgut mit einer Dispersion eines erfindungsgemäßen teilaromatischen Polyesters behandelt.

Dieses so vorbehandelte Saatgut kann anschliessend mit einer agrochemischen Suspensionsformulierung enthaltend mindestens einen, zur Beizung von Saatgut geeigneten agrochemischen Wirkstoff, wobei der Wirkstoff in festen Partikeln vorliegt, welche eine Größe zwischen 0,1µm und 10µm haben, behandelt werden.

Diese agrochemischen Formulierungen sind Suspensionsformulierungen eines (oder mehrerer) agrochemischen Wirkstoffes sein (zBsp. SC, OD, FS), wobei der Wirkstoff die oben angeführten Teilchengrößen aufweisen muß. Die Herstellung von Suspensionsformulierungen ist dem Fachmann bekannt, und ist weiter oben erläutert.

Alternativ kann die Wirkstoffsuspension auch aus einer (ggf. auch kommerziell erhältlichen) Festformulierung eines Wirkstoffes durch Dispergieren in einem Lösungsmittel, vorzugsweise Wasser, hergestellt werden (s.o.).

Der Begriff Saatgut umfasst Saatgut aller Arten, wie z.B. Körner, Samen, Früchte, Knollen, Stecklinge und ähnliche Formen. Bevorzugt beschreibt der Begriff Saatgut hier Körner und Samen.

Geeignetes Saatgut sind Getreidesaaten Halmfruchtsaaten, Hackfruchtsaaten, Ölsaaten, Gemüsesaaten, Gewürzsaatgut, Zierpflanzensaatgut, z.B. Saatgut von Hartweizen, Weizen, Gerste, Hafer, Roggen, Mais (Futtermais und Zuckermais), Soja , Ölsaaten, Kreuzblütler, Baumwolle, Sonnenblumen, Bananen, Reis, Raps, Rüben, , Zuckerrüben, Futterrüben, Eierpflanzen, Kartoffeln, Gras, (Zier-)Rasen, Futtergras, Tomaten, Lauch, Kürbis, Kohl, Eisbergsalat, Pfeffer, Gurken, Melonen, Brassica species, Melonen, Bohnen, Erbsen, Knoblauch, Zwiebeln, Karotten, Zuckerrohr, Tabak, Weintrauben, Petunien und Geranien, Stiefmütterchen, Springkraut. Bevorzugt beschreibt der Begriff Saatgut hier Getreide und Soja.

Die erfindungsgemäßen Beizmittel-Formulierungen können zum Beizen von Saatgut durch herkömmliche Züchtungsmethoden erhaltener Pflanzen sowie zum Beizen von Saatgut transgener Pflanzen eingesetzt werden.

Wie bereits erwähnt kann Saatgut eingesetzt werden, das gegenüber Herbiziden tolerant ist, z.B. gegenüber Sulfonylharnstoffen, Imidazolinonen oder Glufonsinat oder Glyphosate resistenen Pflanzen (s. z.B. EP-A-0242236, EP-A-242246) (WO 92/00377) (EP-A-0257993, U.S. Pat. No. 5,013,659) oder Saatgut transgener Pflanzen, z.B. Baumwolle, die Bacillus thuringiensis toxin (Bt toxins) produzieren und dadurch gegenüber bestimmten Schadorganismen gegenüber resistent sind (EP-A-0142924, EP-A-0193259).

Weiterhin kann auch Saatgut von Pflanzen eingesetzt werden, die im Vergleich mit herkömmlichen Pflanzen modifizierte Eigenschaften aufweisen. Beispiele hierfür sind geänderte Stärkesynthese (e.g. WO 92/11376, WO 92/14827, WO 91/19806) oder Fettsäurezusammensetzungen (WO 91/13972).

Im Rahmen der vorliegenden Erfindung wird auch Saatgut beansprucht, das mit einem erfindungsgemäßen Polyester behandelt ist.

Des weiteren wird Saatgut beansprucht, welches mit einem erfindungsgemäßen Polyester behandelt ist, und in einem zweiten Schritt wie oben beschrieben mit einer herkömmlichen Suspensionsformulierung behandelt wurde.

Des weiteren wird Saatgut beansprucht, welches mit einer erfindungsgemäßen Beizmittel-Formulierung behandelt ist.

Die Aufwandmengen liegen im allgemeinen zwischen 0,1g-10kg Wirkstoff pro 100kg Saatgut, vorzugsweise 1 g bis 5kg, besonders bevorzugt von 1g - 2,5kg. Für spezielles Saatgut wie Salat können die Aufwandmengen auch höher sein. Für Soja werden Auwandmengen von 0,1 - 10 kg verwendet.

Die Saatgutbehandlung kann durch Besprühung des Saatgutes mit der Formulierung oder Vermischen des Saatgutes mit der Formulierung ggf. gefolgt von Trocknen des Saatgutes vor dem Säen und vor Keimung nach dem Fachmann bekannten Methoden durchgeführt werden.

Des weiteren umfasst die vorliegende Erfindung ein Verfahren zur Regulation des Wachstums von Pflanzen und/oder zur Bekämpfung unerwünschten Pflanzenwuchses und /oder zur Bekämpfung von unerwünschtem Insekten- oder Milbenbefall auf Pflanzen und/oder zur Bekämpfung von phytopathogenen Pilzen, **dadurch gekennzeichnet, dass** man Saatgüter von Nutzpflanzen mit einer erfindungsgemäßen Beizmittel-Formulierung behandelt.

Vorzugsweise umfasst die Erfindung Verfahren zur Bekämpfung von unerwünschtem Insekten- oder Milbenbefall auf Pflanzen und/oder zur Bekämpfung von phytopathogenen Pilzen, **dadurch gekennzeichnet, dass** man Saatgüter von Nutzpflanzen mit einer erfindungsgemäßen Beizmittel-Formulierung behandelt.

Bekämpfung unerwünschten Pflanzenwuchses bedeutet die Bekämpfung/Zerstörung von Pflanzen, welche an Orten wachsen, an welchen sie unerwünscht sind, z.B. von

Dicotyledonen Pflanzen der Arten: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Monocotyledonen Pflanzen der Arten: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera

Der Begriff unerwünschte Insekten- oder Milben beschreibt ist aber nicht beschränkt auf folgende Gattungen:
Doppel-bzw. Tausendfüssler wie zum Beispiel Blaniulus Arten
Ameisen (Hymenoptera) wie zum Beispeil. Atta capiguara, Atta cephalotes, Atta laevigata, Atta robusta, Atta sexdens, Atta texana, Monomorium pharaonis, Solenopsis geminata, Solenopsis invicta, Pogonomyrmex Arten und Pheidole megacephala,
Käfer (Coleoptera), wie zum Beispiel Agrilus sinuatus, Agriotes lineatus, Agriotes obscurus und andere Agriotes Arten, Amphimallus solstitialis, Anisandrus dispar, Anthonomus grandis, Anthonomus pomorum, Aracanthus morei, Atomaria linearis, Blapstinus Arten, Blastophagus piniperda, Blitophaga undata, Bothynoderes punciventris, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus und andere Conoderus Arten, Conorhynchus mendicus, Crioceris asparagi, Cylindrocopturus adspersus, Diabrotica (longicornis) barberi, Diabrotica semi-punctata, Diabrotica speciosa, Diabrotica undecimpunctata, Diabrotica virgifera und andere Diabrotica Arten, Eleodes Arten, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus und andere Limonius Arten, Lissorhoptrus oryzophilus, Listronotus bonariensis, Melanotus communis und andere Melanotus Arten, Meligethes aeneus, Melolontha hippocastani, Melolontha melolontha, Oulema oryzae, Ortiorrhynchus sulcatus, Oryzophagus oryzae, Otiorrhynchus ovatus, Oulema oryzae, Phaedon cochleariae, Phyllotreta chrysocephala, Phyllophaga cuyabana und andere Phyllophaga Arten, Phyllopertha horticola, Phyllotreta nemorum, Phyllotreta striolata, und andere Phyllotreta Arten, Popillia japonica, Promecops carinicollis, Premnotrypes voraz, Psylliodes Arten, Sitona lineatus, Sitophilus granaria, Sternechus pinguis, Sternechus subsignatus, und Tanymechus palliatus und andere Tanymechus Arten,
Flies (Diptera) wie zum Beispiel Agromyza oryzea, Chrysomya bezziana, Chrysomya hominivorax, Chrysomya macellaria, Contarinia sorghicola, Cordylobia anthropophaga, Dacus cucurbitae, Dacus oleae, Dasineura brassicae, Delia antique, Delia coarctata, Delia platura, Delia radicum, Fannia canicularis, Gasterophilus intestinalis, Geomyza Tripunctata, Glossina morsitans, Haematobia irritans, Haplodiplosis equestris, Hypoderma lineata, Liriomyza sativae, Liriomyza trifolii, Lucilia caprina, Lucilia cuprina, Lucilia sericata, Lycoria pectoralis, Mayetiola destructor, Muscina stabulans, Oestrus ovis, Opomyza florum, Oscinella frit, Pegomya hysocyami, Phorbia antiqua, Phorbia brassicae, Phorbia coarctata, Progonya leyoscianii, Psila rosae, Rhagoletis cerasi, Rhagoletis pomonella, Tabanus bovinus, Tetanops myopaeformis, Tipula oleracea und Tipula paludosa,
Heteropterans (Heteroptera), wie zum Beispiel Acrosternum hilare, Blissus leucopterus, Cicadellidae wie zum Beispiel Empoasca fabae, Chrysomelidae, Cyrtopeltis notatus, Delpahcidae, Dysdercus cingulatus, Dysdercus intermedius, Eurygaster integriceps, Euschistus impictiventris, Leptoglossus phyllopus, Lygus lineolaris, Lygus pratensis, Nephotettix Arten, Nezara viridula, Pentatomidae, Piesma quadrata, Solubea insularis und Thyanta perditor,
Aphids und andere homopterans (Homoptera), e.g. Acyrthosiphon onobrychis, Adelges laricis, Aphidula nasturtii, Aphis fabae, Aphis.forbesi, Aphis glycines, Aphis gossypii, Aphis grossulariae, Aphis pomi, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes (Myzus) persicae, Myzus ascalonicus, Myzus cerasi, Myzus varians, Nasonovia ribis-nigri, Nilaparvata lugens, Pemphigus bursarius, Pemphigus populivenae, und andere Pemphigus Arten, Perkinsiella saccharicida, Phorodon humuli, Psyllidae wie zum Beispiel Psylla mali, Psylla piri und andere Psylla Arten, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, und Viteus vitifolii;
Lepidoptera, zum Beispiel Agrotis ypsilon, Agrotis segetum und andere Agrotis Arten, Alabama argillacea, Anticarsia gemmatalis, Argyresthia conjugella, Autographa gamma, Bupalus piniarius, Cacoecia murinana, Capua reticulana, Cheimatobia brumata, Chilo suppresalis und andere Chilo Arten,Choristoneura fumiferana, Choristoneura occidentalis, Cirphis unipuncta, Cnaphlocrocis medinalis, Cydia pomonella, Dendrolimus pini, Diaphania nitidalis, Diatraea grandiosella, Earias insulana, Elasmopalpus lignosellus, Eupoecilia ambiguella, Euxoa Arten, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Lerodea eufala, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Momphidae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae; Plathypena scabra, Plutella xylostella, Pseudoplusia includens, Rhyacionia frustrana, Scrobipalpula absoluta,Sesamia nonagrioides und andere Sesamia Arten, Sitotroga cerealella, Sparganothis pilleriana, Spodoptera frugiperda, Spodoptera littoralis, Spodoptera litura, Thaumatopoea pityocampa, Tortrix viridana, Trichoplusia ni und Zeiraphera canadensis,
Orthoptera, wie zum Beispiel Acrididae, Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus und Tachycines asynamorus ;
Termiten (Isoptera), wie zum Beispiel Calotermes flavicollis, Coptotermes Arten, Dalbulus maidis, Leucotermes flavipes, Macrotermes gilvus, Reticulitermes lucifugus und Termes natalensis;
thrips (Thysanoptera) wie zum Beispiel Frankliniella fusca, Frankliniella occidentalis, Frankliniella tritici und andere Frankliniella Arten, Scirtothrips citri, Thrips oryzae, Thrips palmi, Thrips simplex und Thrips tabaci,
Spinnentiere, wie zum Beispiel Acarina, zum Beispiel e.g. of the families Argasidae, Ixodidae und Sarcoptidae, wie zum Beispiel Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, und Eriophyidae Arten wie zum Beispiel Aculus schlechtendali, Phyllocoptrata oleivora und Eriophyes sheldoni; Tarsonemidae Arten wie zum Beispiel Phytonemus pallidus und Polyphagotarsonemus latus; Tenuipalpidae Arten wie zum Beispiel Brevipalpus phoenicis; Tetranychidae Arten wie zum Beispiel Tetranychus cinnabarinus, Tetranychus kanzawai, Tetranychus pacificus, Tetranychus telarius und Tetranychus urticae, Panonychus ulmi, Panonychus citri, und Oligonychus pratensis;
Nematoden, besonders Planzen befallende Nematoden wie zum Beispiel root knot nematodes, Meloidogyne hapla, Meloidogyne incognita, Meloidogyne javanica, und andere Meloidogyne Arten; cyst-forming nematodes, Globodera rostochiensis und andere Globodera Arten; Heterodera avenae, Heterodera glycines, Heterodera schachtii, Heterodera trifolii, und andere Heterodera Arten; Seed gall nematodes, Anguina Arten; Stem und foliar nematodes, Aphelenchoides Arten; Sting nematodes, Belonolaimus longicaudatus und andere Belonolaimus Arten; Pine nematodes, Bursaphelenchus xylophilus und andere Bursaphelenchus Arten; Ring nematodes, Criconema Arten, Criconemella Arten, Criconemoides Arten, Mesocriconema Arten; Stem und bulb nematodes, Ditylenchus destructor, Ditylenchus dipsaci und andere Ditylenchus Arten; Awl nematodes, Dolichodorus Arten; Spiral nematodes, Heliocotylenchus multicinctus und andere Helicotylenchus Arten; Sheath und sheathoid nematodes, Hemicycliophora Arten und Hemicriconemoides Arten; Hirshmanniella Arten; Lance nematodes, Hoploaimus Arten; false rootknot nematodes, Nacobbus Arten; Needle nematodes, Longidorus elongatus und andere Longidorus Arten; Lesion nematodes, Pratylenchus neglectus, Pratylenchus penetrans, Pratylenchus curvitatus, Pratylenchus goodeyi und andere Pratylenchus Arten; Burrowing nematodes, Radopholus similis und andere Radopholus Arten; Reniform nematodes, Rotylenchus robustus und andere Rotylenchus Arten; Scutellonema Arten; Stubby root nematodes, Trichodorus primitivus und andere Trichodorus Arten, Paratrichodorus Arten; Stunt nematodes, Tylenchorhynchus claytoni, Tylenchorhynchus dubius und andere Tylenchorhynchus Arten; Citrus nematodes, Tylenchulus Arten; Dagger nematodes, Xiphinema Arten; und andere plant parasitic nematode Arten.

Der Begriff phytopathogene Pilze beschreibt ist aber nicht beschränkt auf folgende Spezies:
Der Begriff phytopathogene Pilze beschreibt ist aber nicht beschränkt auf folgende Spezies: Alternaria spp. an Reis, Gemüse, Sojabohnen, Raps, Zuckerrübe und Früchen, Aphanomyces spp. an Zuckerrübe und Gemüse, Bipolaris and Drechslera spp. Mais, Getreide, Reis und Zierrasen, Blumeria graminis (powdery mildew) an Getreide, Botrytis cinerea (gray mold) an Erdbeeren, Gemüse, Zierblumen, Weintrauben, Bremia lactucae an Salat, Cercospora spp. an Mais, Soja, und Zuckerrübe, Cochliobolus spp. an Mais, Getreide, Reis (e.g. Cochliobolus sativus an Getreide, Cochliobolus miyabeanus an Reis), Colletotrichum spp. an Soja und Baumwolle, Drechslera spp. an Getreide und Korn / Mais, Exserohilum spp. an Mais, Erysiphe cichoracearum und Sphaerotheca fuliginea an Gurken, Erysiphe necator an Weintrauben, Fusarium and Verticillium spp. an unterschiedlichen Pflanzen, Gaeumannomyces graminis an Getreide, Gibberella spp. an Getreide und Reis (e.g. Gibberella fujikuroi an Reis, Gibberella zeae an Getreide), Grainstaining complex an Reis, Microdochium nivale an Getreide, Mycosphaerella spp. an Getreide, bananas and peanuts, Phakopsora pachyrhizi und Phakopsora meibomiae on soybeans, Phomopsis spp. an Soja und Sonnenblumen sunflower, Phytophthora infestans an Kartoffeln und Tomante, Plasmopara viticola an Weintrauben, Podosphaera leucotricha an Äpfeln, Pseudocercosporella herpotrichoides an Weizen und Gerste, Pseudoperonospora spp. an Hopfen und Gurke, Puccinia spp. an Getreide und Mais, Pyrenophora spp. an Getreide, Pyricularia oryzae an Reis" Cochliobolus miyabeanus and Corticium sasakii (Rhizoctonia solani), Fusarium semitectum (and/or moniliforme), Cercospora oryzae, Sarocladium oryzae, S attenuatum, Entyloma oryzae, Gibberella fujikuroi (bakanae), Grainstaining complex (various pathogens), Bipolaris spp., Drechslera spp. und Pythium and Rhizoctonia spp. an Reis, Mais, Baumwolle, Sonnenblume, Raps, Raps (canola, oilseed rape), Gemüse, Zierrasen, Nüsse und weitere Pflanzen, Rhizoctonia solani an Kartoffel, Sclerotinia spp. an Rapsarten (canola/oilseed rape) und Sonnenblume, Septoria tritici and Stagonospora nodorum an Weizen, Uncinula necator an Weintrauben, Sphacelotheca reiliana an Mais, Thievaliopsis spp. an Soja und Baumwolle, Tilletia spp. an Getreiden, Ustilago spp. an Getreide, Mais, Zuckerrohr und, Venturia spp. (scab) an Äpfeln und Birnen;

### Beispiele:

### Beispiel 1: Herstellung einer wässrigen Dispersion eines TA Polyesters

9,0 g Polybutylenadipatterephthalat (Ecoflex®, BASF AG) wurden in 1000 g Tetrahydrofuran bei Raumtemperatur gelöst (Lösemittelphase).
In einem separatem Gefäß wurden 3,3 g Na-Caseinat und 2,0 g Na-Alkylphenolethersulfat (Lutensit A-ES®, BASF AG) in 10 Liter deionisiertem Wasser gelöst (wässrige Phase).
Zur Ausfällung des Polybutylenadipatterephthalates wurden die Lösemittelphase mit einer Pumprate von 3,19 kg/h und einer Temperatur von 95,9°C und die wässrige Phase mit einer Pumprate von 29,9 kg/h und bei Raumtemperatur kontinuierlich in einer Mischkammer bei einem Systemdruck von ca. 24 bar vermischt.
Anschließend wurden das Tetrahydrofuran und ein Teil des Wassers in einem Rotationsverdampfer bei einer Temperatur von 65°C und bei einem Druck von 200 mbar abgezogen. Die so erhaltene Dispersion wies bei einem Feststoffgehalt von 17,9 % eine Teilchengröße von 117 nm auf.

### Beispiel 2: Herstellung einer wässrigen Dispersion eines TA Polyesters

17,5 g Polybutylenadipatterephthalat (Ecoflex®, BASF AG) werden in 250 g Methylenchlorid bei Raumtemperatur gelöst (Lösemittelphase). In einem separatem Gefäß wurden 2 g Saccharoseester (Ryoto® S-1670S) in 350 g deionisiertem Wasser bei 70°C gelöst (wässrige Phase).
Anschließend wurde die Lösemittelphase mittels eines Dispergiergerätes (Ultra-Turrax®) in die wässrige Phase eingerührt. Danach wurden 100 ml Isopropanol dazugegeben. Anschließend wurde unter Kühlung 10 min. mit dem Dispergiergerät (Ultra-Turrax®) emulgiert. Die so erhaltene Rohemulsion wies bei einem Feststoffgehalt von 2,8 % und einem pH-Wert von 7,5 eine Tröpfchengröße von 466 nm auf.
Diese Rohemulsion wurde dann in drei Passagen in einem Hochdruck-Homogenisator bei einem Druck von 700 bar weiter homogenisiert. Die Tröpfchengröße betrug dann 339 nm. Dann wurden 2 g Na-Dodecylsulfat in 150 g deionisiertem Wasser gelöst und zur Emulsion dazugegeben. Danach wurde die Emulsion nochmals dreimal unter den gleichen Bedingungen wie zuvor im Hochdruckhomogenisator behandelt. Die Tröpfchengröße wurde dadurch auf 116 nm reduziert.
In einem Rotationsverdampfer wurden anschließend das Methylenchlorid und so viel Wasser abgezogen, bis der Feststoffgehalt der Dispersion 29,3 % betrug. Die Teilchengröße wurde mittels dynamischer Lichtstreuung zu 108 nm und die Viskosität der Dispersion zu 6 mPas bei einer Scherrate von 50 sec-1 bestimmt.

### Beispiel 3: Beizen des Saatgutes mit einer kommerziell erhältlichen Beizmittel-Formulierung

Als Beizmittel wurde Premis 025 FS® der Firma BASF verwendet, eine kommerziell erhältliche Formulierung des Pflanzenschutzmittels Triticonazol.
Zum Beizen wurde das Beizgerät (MiniRotostat der Firma Satec) mit 2 kg unbehandeltem Soja-Saatgut befüllt. Nach Einschalten der Schüssel und des Drehtellers wurden 10 ml Premis 025 FS® auf den Drehteller gegeben. Nach erfolgter Zugabe wurde 20 Sekunden nachgemischt und anschließend das behandelte Saatgut entnommen und an der Luft getrocknet.

### Beispiel 4: Beizen des Saatgutes mit einer erfindungsgemäßen Beizmittel-Formulierung enthaltend eine wässrige Dispersion eines TA Polyester

Zum Herstellen der erfindungsgemäßen Beizmittel-Formulierung wurde die nach Beispiel 2 erhaltene wässrige Dispersion mit Premis 025 FS® der Firma BASF zu gleichen Teilen gemischt.
Zum Beizen wurde das Beizgerät (MiniRotostat der Firma Satec) mit 2 kg unbehandeltem Soja-Saatgut befüllt. Nach Einschalten der Schüssel und des Drehtellers wurden 20 ml der erhaltenen Abmischung auf den Drehteller gegeben. Nach erfolgter Zugabe wurde 20 Sekunden nachgemischt und anschließend das behandelte Saatgut entnommen und an der Luft getrocknet.

### Beispiel 5: Untersuchung des Staubverhaltens

Mit dem gemäß Beispiel 3 und Beispiel 4 erhaltenem gebeiztem Saatgut wurde ein Staubtest durchgeführt. Hierzu wurden 250 g Saatgut in eine 500 ml Glasflache eingewogen und diese auf einem Walzenstuhl bei 60 U/min 10 Minuten lang gedreht. Nach dieser Behandlung wurde für das nach Beispiel 3 hergestellte Saatgut ein Staubanteil von 1,0 mg Staub pro 100 kg Soja-Saatgut gefunden. Für das nach Beispiel 4 hergestellte Soja-Saatgut basierend auf der erfindungsgemäßen Beizmittel-Formulierung wurde ein niedrigerer Staubanteil von 0,4 mg Staub pro 100 kg Soja-Saatgut gefunden.

### Beispiel 6: Untersuchung des Einflusses auf die Keimungsrate

Zur Untersuchung des Einflusses der Beizung auf die Keimungsrate der behandelten Sojabohnen wurde die Keimungsrate unbehandelter Sojabohnen mit der Keimungsrate behandelter Sojabohnen verglichen.
Die Keimungsrate folgender Saatgutproben wurde verglichen:

### Soja-Saatgut unbehandelt

Soja-Saatgut behandelt mit der nach Beispiel 2 hergestellten wässrigen Dispersion (Aufwandmenge: 50 g pro 100 kg Saatgut)
Soja-Saatgut behandelt mit der kommerziell (BASF) erhältlichen Beizmittel-Formulierung REAL 200 FS (Aufwandmenge: 12,5 g pro 100 kg Saatgut). (erfindungsgemäße Vorgehensweise) Soja-Saatgut behandelt mit der nach Beispiel 2 hergestellten wässrigen Ecoflex®-Dispersion (Aufwandmenge: 50 g pro 100 kg Saatgut) und anschließend behandelt mit der kommerziell (BASF) erhältlichen BeizmittelFormulierung REAL 200 FS (Aufwandmenge: 12,5 g pro 100 kg Saatgut).

Im Falle des mit der wässrigen Ecoflex®-Dispersion behandelten Soja-Saatgutes (b) wurde eine Keimungsrate ähnlich der des unbehandelten Saatgutes gefunden. Bei Behandlung mit der kommerziellen Beizmittel-Formulierung (c) wurde hingegen eine deutlich verlangsamte Keimungsrate beobachtet. Bei erfindungsgemäßer zusätzlicher Behandlung mit der wässrigen Ecoflex®-Dispersion (d) wurde eine deutlich verbesserte Keimungsrate beobachtet.

### Beispiel 7: Untersuchung des Einflusses auf die Wüchsigkeit von Sojapflanzen

Zur Untersuchung des Einflusses der Beizung auf die Wüchsigkeit wurden die Wuchshöhen der Sojapflanzen aus behandeltem Saatgut mit den Wuchshöhen von Pflanzen aus unbehandeltem Saatgut verglichen.
Die Wüchsigkeit von Sojapflanzen aus folgenden Saatgutproben wurde verglichen:

### Soja-Saatgut unbehandelt

Soja-Saatgut behandelt mit der nach Beispiel 2 hergestellten wässrigen Dispersion (Aufwandmenge: 50 g pro 100 kg Saatgut)
Soja-Saatgut behandelt mit der kommerziell (BASF) erhältlichen Beizmittel-Formulierung REAL 200 FS (Aufwandmenge: 25 g pro 100 kg Saatgut, Wirkstoff Triticonazol).
(erfindungsgemäße Vorgehensweise) Soja-Saatgut behandelt mit der nach Beispiel 2 hergestellten wässrigen Ecoflex®-Dispersion (Aufwandmenge: 50 g pro 100 kg Saatgut) und anschließend behandelt mit der kommerziell (BASF) erhältlichen BeizmittelFormulierung REAL 200 FS (Aufwandmenge: 25 g pro 100 kg Saatgut).

Es zeigte sich, dass der Pflanzenwuchs der Sojapflanzen durch die Behandlung des Saatgutes mit wässriger Ecoflex®-Dispersion nicht wesentlich beeinflusst wurde. Bei Behandlung mit der kommerziellen Beizmittel-Formulierung (g) wurde hingegen eine deutlich verlangsamter Pflanzenwuchs bei 20 -29 Tage alten Pflanzen beobachtet.
Dieser Effekt ist bei der zusätzlichen Behandlung des Saatgutes mit der wässrigen Ecoflex®-Dispersion (h) (erfindungsgemäß) deutlich weniger stark ausgeprägt. Bei älteren Pflanzen (60 Tag alt) wurde hingegen ein verbesserter Pflanzenwuchs der Pflanzen aus behandeltem Saatgut beobachtet. Diese Verbesserung war besonders stark ausgeprägt für die Pflanzen aus dem zusätzlich mit Ecoflex® behandeltem Saatgut.

### Beispiel 8: Fungizide Wirkung

Bei der Untersuchung von mit Sojarost (Phakopsora pachirisi) befallenen Sojapflanzen aus behandeltem und unbehandeltem Saatgut zeigte sich, dass der Befall mit Sojarost durch die Behandlung des Saatgutes deutlich verringert werden kann. Durch zusätzliche erfindungsgemäße Behandlung des Saatgutes mit wässriger Ecoflex®-Dispersion (Aufwandmenge 12,5 g /100 kg Saatgut) wurde bei niedrigen Aufwandmengen des Wirkstoffes ein geringer Befall beobachtet.

Bei höheren Aufwandmengen wurde durch die erfindungsgemäße Formulierung keine Beeinträchtigung der fungiziden Wirkung beobachtet.

## Patentansprüche

1. Verwendung eines biologisch abbaubaren Polyesters für die Beizung von Saatgut, **dadurch gekennzeichnet, dass** der Polyester ein teilaromatischer Polyester ist aufgebaut aus:
A) einer Säurekomponente aus
a1) 30 bis 95 mol-% mindestens einer aliphatischen oder mindestens einer cycloaliphatischen Dicarbonsäure oder deren esterbildende Derivate oder Mischungen davon
a2) 5 bis 70 mol-% mindestens einer aromatischen Dicarbonsäure oder deren esterbildendem Derivat oder Mischungen davon,
wobei die Molprozente der Komponenten a1) bis a2) zusammen 100% ergeben und
B) einer Diolkomponente aus mindestens einem C₂-bis C₁₂-Alkandiol oder einem C₅- bis C₁₀-Cycloalkandiol oder Mischungen davon.

2. Flüssige Beizmittel-Formulierung umfassend
(1) einen biologisch abbaubaren teilaromatischen Polyester gemäß Anspruch 1;
(2) mindestens einen, zur Beizung von Saatgut geeigneten agrochemischen Wirkstoff, wobei der Wirkstoff in festen Partikeln vorliegt, welche eine Größe zwischen 0,1µm und 10µm haben
(3) ein Lösungsmittel.

3. Beizmitel-Formullerung gemäß Anspruch 2, **dadurch gekennzeichnet, dass** die Formulierung als weitere Komponente Polymilchsäure enthält.

4. Beizmittel Formulierung gemäß einem der Ansprüche 2 bis 3, **dadurch gekennzeichnet, dass** der agrochemische Wirkstoff aus der Gruppe bestehend aus Herbiziden und/oder Safenern, Fungiziden und Insektiziden ausgewählt wird.

5. Verfahren zur Herstellung einer Beizmittel-Formulierung gemäß einem der Ansprüche 2 bis 4, **dadurch gekennzeichnet, dass** man eine Suspension eines zur Beizung von Saatgut geeigneten agrochemischen Wirkstoffes, in welcher der Wirkstoff in festen Partikeln vorliegt, die eine Größe zwischen 0,1µm und 10µm haben; mit einer Dispersion eines biologisch abbaubareren teilaromatischen Polyesters gemäß Anspruch 1 vermischt.

6. Verfahren zum Beizen von Saatgut, **dadurch gekennzeichnet, dass** man
(a) Saatgut mit einer Formulierung gemäß einem der Ansprüchen 2 bis 4 behandelt; und
(b) das in Schritt (a) erhaltene Saatgut gegebenenfalls trocknet

7. Verfahren zum Beizen von Saatgut, **dadurch gekennzeichnet, dass** man Saatgut mit einer Dispersion eines biologisch abbaubaren teilaromatischen Polyesters gemäß Anspruch 1 behandelt.

8. Verfahren gemäß einem der Ansprüche 6 oder 7, **dadurch gekennzeichnet, dass** man das behandelte Saatgut in einem zweiten Schritt mit einer herkömmlichen agrochemischen Suspensionsformulierung enthaltend mindestens einen, zur Beizung von Saatgut geeigneten agrochemischen Wirkstoff, wobei der Wirkstoff in festen Partikeln vorliegt, welche eine Größe zwischen 0,1µm und 10µm haben, behandelt.

9. Verfahren gemäß einem der Ansprüche 5 bis 8, **dadurch gekennzeichnet, dass** es sich bei dem Saatgut um Soja handelt.

10. Saatgut, gebeizt mit einer mit einer Dispersion des biologisch abbaubaren teilaromatischen Polyesters nach Anspruch 1.

11. Saatgut, gebeizt mit einer Formulierung gemäß einem der Ansprüche 2 bis 4.

12. Verfahren zur Regulation des Wachstums von Pflanzen und/oder zur Bekämpfung unerwünschten Pflanzenwuchses und /oder zur Bekämpfung von unerwünschtem Insekten- oder Milbenbefall auf Pflanzen und/oder zur Bekämpfung von phytopathogenen Pilzen, **dadurch gekennzeichnet, dass** man Saatgüter von Nutzpflanzen mit einer Formulierung gemäß einem der Ansprüche 2 bis 4 behandelt oder Saatgut gemäß Anspruch 10 oder 11 verwendet.

## Claims

1. The use of a biodegradable polyester for dressing seed, wherein the polyester is a partially aromatic constructed of:
A) an acid component of
a1) 30 to 95 mol% of at least one aliphatic or at least one cycloaliphatic dicarboxylic acid or ester-forming derivatives thereof or mixtures thereof
a2) 5 to 70 mol% of at least one aromatic dicarboxylic acid or its ester-forming derivative or mixtures thereof,
where the mole percentages of components a1) to a2) add up to 100% and
B) a diol component of at least one C₂- to C₁₂-alkanediol or one C₅- to C₁₀-cycloalkanediol or mixtures thereof.

2. A liquid seed dressing formulation comprising
(1) a biodegradable, partially aromatic polyester according to claim 1;
(2) at least one agrochemically active compound suitable for dressing seed, where the active compound is present in solid particles having a size between 0.1 µm and 10 µm
(3) a solvent.

3. The seed dressing formulation according to claim 2, wherein the formulation comprises, as further component, polylactic acid.

4. The seed dressing formulation according to claim 2 or 3, wherein the agrochemically active compound is selected from the group consisting of herbicides and/or safeners, fungicides and insecticides.

5. A process for preparing a seed dressing formulation according to any of claims 2 to 4, which comprises mixing a suspension of an agrochemically active compound suitable for dressing seed, in which the active compound is present in solid particles having a size between 0.1 µm and 10 µm, with a dispersion of a biodegradable, partially aromatic polyester according to claim 1.

6. A method for dressing seed, which comprises
(a) treating seed with a formulation according to any of claims 2 to 4; and
(b) if appropriate, drying the seed obtained in step (a).

7. A method for dressing seed, which comprises treating seed with a dispersion of a biodegradable, partially aromatic polyester polyester according to claim 1.

8. The method according to claim 6 or 7 wherein the treated seed is, in a second step, treated with a customary agrochemical suspension formulation comprising at least one agrochemically active compound suitable for dressing seed, where the active compound is present in solid particles having a size between 0.1 µm and 10 µm.

9. The method according to any of claims 5 to 8, wherein the seed are soybeans.

10. Seed, dressed with a dispersion of a biodegradable, partially aromatic polyester according to claim 1.

11. Seed, dressed with a formulation according to one of claims 2 to 4.

12. A method for regulating the growth of plants and/or for controlling unwanted vegetation and/or for controlling unwanted infestation by insects or mites on plants and/or for controlling phytopathogenic fungi, which comprises treating seed of useful plants with a formulation according to any of claims 2 to 4 or using seed according to claim 10 or 11.

## Revendications

1. Utilisation d'un polyester biologiquement dégradable pour le traitement de semences, **caractérisée en ce que** le polyester est un polyester partiellement aromatique constitué de :
A) un composant acide à base de
a1) 30 à 95 % en moles d'au moins un acide dicarboxylique aliphatique ou d'au moins un acide dicarboxylique cycloaliphatique ou de leurs dérivés formant des esters ou de mélanges de ceux-ci
a2) 5 à 70 % en moles d'au moins un acide dicarboxylique aromatique ou d'un dérivé formant un ester de celui-ci ou de mélanges de ceux-ci,
les pour cent en moles des composants a1 à a2) s'élevant ensemble à 100 % et
B) un composant diol à base d'au moins un alcanediol en C₂-C₁₂ ou un cycloalcanediol en C₅-C₁₀ ou de mélanges de ceux-ci.

2. Composition liquide d'agent de traitement comprenant
(1) un polyester partiellement aromatique biologiquement dégradable selon la revendication 1 ;
(2) au moins une substance active agrochimique appropriée au traitement de semences, la substance active se trouvant en particules solides qui ont une taille comprise entre 0,1 µm et 10 µm
(3) un solvant.

3. Composition d'agent de traitement selon la revendication 2, **caractérisée en ce que** la composition contient comme autre composant du poly(acide lactique).

4. Composition d'agent de traitement selon l'une quelconque des revendications 2 et 3, **caractérisée en ce que** la substance active agrochimique est choisie dans le groupe constitué par des herbicides et/ou des phytoprotecteurs, des fongicides et des insecticides.

5. Procédé pour la préparation d'une composition d'agent de traitement selon une ou plusieurs des revendications 2 à 4, **caractérisé en ce qu'**on mélange une suspension d'une substance active agrochimique appropriée au traitement de semences, dans laquelle la substance active se trouve en particules solides qui ont une taille comprise entre 0,1 µm et 10 µm ; avec une dispersion d'un polyester partiellement aromatique, biologiquement dégradable, selon la revendication 1.

6. Procédé pour le traitement de semence, **caractérisé en ce que**
(a) on traite la semence par une composition selon l'une quelconque des revendications 2 à 4 ; et
(b) éventuellement on sèche la semence obtenue dans l'étape (a).

7. Procédé pour le traitement de semence, **caractérisé en ce qu'**on traite la semence par une dispersion d'un polyester partiellement aromatique, biologiquement dégradable, selon la revendication 1.

8. Procédé selon l'une quelconque des revendications 6 et 7, **caractérisé en ce que** dans une deuxième étape on traite la semence traitée, par une composition agrochimique en suspension traditionnelle contenant au moins une substance active agrochimique appropriée au traitement de semences, la substance active se trouvant en particules solides qui ont une taille comprise entre 0,1 µm et 10 µm.

9. Procédé selon l'une quelconque des revendications 5 à 8, **caractérisé en ce que** la semence consiste en soja.

10. Semence, traitée par une dispersion du polyester partiellement aromatique, biologiquement dégradable, selon la revendication 1.

11. Semence, traitée par une composition selon l'une quelconque des revendications 2 à 4.

12. Procédé pour la régulation de la croissance de plantes et/ou pour la lutte contre une croissance végétale indésirable et/ou pour la lutte contre l'attaque indésirable par des insectes ou des acariens sur des plantes et/ou pour la lutte contre des champignons phytopathogènes, **caractérisé en ce qu'**on traite des semences de plantes utiles par une composition selon l'une quelconque des revendications 2 à 4 ou on utilise la semence selon la revendication 10 ou 11.
